## Europäisches Patentamt

## European Patent Office

## Office européen des brevets

(19)

(11) **EP 0 578 798 B1**

## (12) EUROPÄISCHE PATENTSCHRIFT

(45) Veröffentlichungstag und Bekanntmachung des Hinweises auf die Patenterteilung:
**23.04.1997 Patentblatt 1997/17**

(21) Anmeldenummer: **93902083.0**

(22) Anmeldetag: **05.02.1993**

(51) Int Cl.6: **G01N 21/27**, G01N 21/35

(86) Internationale Anmeldenummer:
**PCT/DE93/00096**

(87) Internationale Veröffentlichungsnummer:
**WO 93/16370 (19.08.1993 Gazette 1993/20)**

(54) **GERÄT ZUR ANALYSE EINER MEDIZINISCHEN PROBE**

DEVICE FOR ANALYSING A MEDICAL SAMPLE

APPAREIL VISANT A ANALYSER UN PRELEVEMENT MEDICAL

(84) Benannte Vertragsstaaten:
**AT BE CH DE DK ES FR GB GR IE IT LI LU NL PT SE**

(30) Priorität: **05.02.1992 DE 4203202**

(43) Veröffentlichungstag der Anmeldung:
**19.01.1994 Patentblatt 1994/03**

(73) Patentinhaber: **BOEHRINGER MANNHEIM GMBH**
**68298 Mannheim (DE)**

(72) Erfinder:
• **KRAUSE, Friedemann**
  **D-82377 Penzberg (DE)**

• **GFRÖRER, Andreas**
  **D-8230 Starnberg 5 (DE)**

(74) Vertreter: **Pfeifer, Hans-Peter, Dr.,**
**Dr. H.-P. Pfeifer Dr. P. Jany, Patentanwälte**
**Beiertheimer Allee 19**
**76137 Karlsruhe (DE)**

(56) Entgegenhaltungen:
EP-A- 0 210 417     DE-A- 2 820 441
DE-A- 3 729 189     DE-A- 3 908 831

**Beschreibung**

Die Erfindung betrifft ein Verfahren und ein Gerät zur Analyse einer medizinischen Probe, insbesondere einer Körperflüssigkeit, wie Blut oder Urin.

Die Analyse erfolgt mit Hilfe von Reagenzien, wobei enzymatische und immunochemische Reagenzien eine besondere Bedeutung haben. Für die Bestimmung einer bestimmten Komponente einer Körperflüssigkeit (üblicherweise als "Parameter" bezeichnet) wird jeweils ein bestimmter Satz von Reagenzien, (wie beispielsweise Enzymen, Indikatoren oder Antikörpern) und Hilfssubstanzen (wie beispielsweise Puffern, Netzmitteln und dergleichen) benötigt, die insgesamt als Reagenzsystem zur Bestimmung des jeweiligen Parameters bezeichnet werden. Die Reagenzien werden gleichzeitig oder in mehreren Stufen nacheinander mit einem aliquoten Teil der Probe gemischt und inkubiert, um die Analysereaktion ablaufen zu lassen.

Am Ende der Reaktion findet eine physikalisch nachweisbare Veränderung statt, die als für die gesuchte Konzentration des Analyten charakteristische Meßgröße gemessen wird. Meist ist dies eine Farbänderung, die mit Hilfe eines Photometers quantitativ vermessen werden kann. Es werden jedoch auch andere optische (z.B. nephelometrische und fluorimetrische) sowie nichtoptische (z.B. elektrochemische) Testprinzipien verwendet. Die Erfindung richtet sich insbesondere auf Analysen, bei denen die physikalisch nachweisbare Veränderung mit optischen Mitteln gemessen wird, ist grundsätzlich jedoch auch für andere Testprinzipien geeignet.

Die bei solchen klinisch-chemischen Tests ablaufenden Reaktionen müssen meist bei exakt vorgegebenen Temperaturen stattfinden, wobei die erforderliche Temperaturstabilität und -genauigkeit häufig bei plus/minus 0,1°C liegt. Die Einhaltung und Kontrolle der Temperatur der Testflüssigkeiten in den Reaktionsgefäßen von Analysegeräten ist deshalb ein Problem, mit dem sich die Fachwelt seit langem beschäftigt.

Vielfach werden die Reaktionsgefäße in einem thermostatisierten Wasserbad durch das Analysegerät transportiert. Die damit verbundene gute Wärmeübertragung führt dazu, daß die Solltemperatur in den Reagenzgefäßen verhältnismäßig schnell erreicht und gut konstant gehalten wird. Diese Problemlösung ist jedoch konstruktiv sehr aufwendig.

Bei der Mehrzahl der Analysegeräte wird deshalb mit festen oder gasförmigen Mitteln versucht, die gewünschte Temperatur einzuhalten. Weit verbreitet sind Konstruktionen, bei denen sich die Reaktionsgefäße in Ausnehmungen von Rotoren oder Transportmagazinen (sogenannten "Racks") befinden, wobei der Rotor bzw. das Rack mit Hilfe von Temperaturmeßelementen und Heizeinrichtungen auf einer definierten Temperatur gehalten wird und durch genaue Anpassung des Sitzes des Reaktionsgefäßes in dem Rotor bzw. Rack eine möglichst gute Wärmeübertragung gewährleistet werden soll. Dies setzt jedoch voraus, daß die Temperatur der Reaktionsgefäße in allen Positionen des Rotors bzw. Racks gleichartig durch deren Temperierung beeinflußt wird. Praktische Erfahrungen zeigen, daß unvermeidliche Temperaturgradienten zu erheblichen Abweichungen der tatsächlichen Temperatur in dem Reaktionsgefäß von der Solltemperatur führen. Ähnliche Probleme bestehen auch bei Systemen, bei denen die Reaktionsgefäße mit temperierter Luft umspült werden.

Die Probleme mit unvermeidlichen Temperaturgradienten zwischen der Umgebung der Reaktionsgefäße und den Reaktionsgefäßen selbst werden bei einem weiteren bekannten Analysegerät dadurch vermieden, daß ein Flüssigkristall-Film an der Wand jedes Reaktionsgefäßes vorgesehen ist und von einer Lichtquelle angestrahlt wird. Die Änderung des reflektierten Lichts in Abhängigkeit von der Temperatur wird detektiert und erlaubt eine gute Genauigkeit der Temperaturbestimmung. Durch die Aufbringung der Flüssigkristalle werden die Kosten der Reaktionsgefäße, welche meist einmalverwendbare (disposible) Kunststoffgefäße sind, wesentlich erhöht. Sofern die Flüssigkristallschicht außenseitig aufgebracht ist, verbleibt ein Temperaturgradient durch die thermisch relativ gut isolierende Kunststoffwand des Reaktionsgefäßes zu der Flüssigkeit in seinem Inneren. Soweit der Flüssigkristall innenseitig angebracht wird, können sich Probleme beim Mischen ergeben und es besteht die Gefahr von Reaktionen des Flüssigkristalls mit Reagenzien des Reagenzsystems.

Der Erfindung liegt daher die Aufgabe zugrunde, ein Analyseverfahren und ein Analysegerät zur Verfügung zu stellen, bei denen die Temperatur der Testflüssigkeit direkt und berührungsfrei in der Testflüssigkeit selbst bestimmt werden kann.

Die Aufgabe wird gelöst durch ein Verfahren zur Analyse einer medizinischen Probe mit Hilfe eines Analysegerätes, bei welchem sich in einer optischen Küvette in dem Analysegerät eine Testflüssigkeit befindet, welche einen aliquoten Teil der Probe und Reagenzien enthält, die mindestens ein Teil eines für die Analyse der Komponente spezifischen Reagenzsystems sind, und die Temperatur der Testflüssigkeit in der Küvette bestimmt wird, wobei in einem Temperaturkalibrationsschritt die optische Absorption einer Kalibratorflüssigkeit bei mindestens zwei Wellenlängen im NIR-Bereich bei verschiedenen Temperaturen bestimmt wird, um einen Kalibrationsdatensatz hinsichtlich der Temperaturabhängigkeit der optischen Absorption zu gewinnen, und in einem Temperaturmeßschritt die optische Absorption einer Testflüssigkeit von unbekannter Temperatur bei den gleichen Wellenlängen gemessen und die Temperatur durch Vergleich der in dem Meßschritt gewonnenen Absorptionsdaten mit dem Kalibrationsdatensatz bestimmt wird.

Die Bestimmung der Temperatur beruht bei der vorliegenden Erfindung auf der temperaturabhängigen Änderung der optischen Absorption im NIR-Bereich (800 nm bis 2500 nm) des elektromagnetischen Spektrums. In diesem Spektralbereich befinden sich Absorptionsbanden, die Obertöne und Kombinationsbanden verschiedener Schwingungsmoden des Wassers sind. Die Temperaturabhängigkeit dieser Absorptionsbanden ist sehr gering. Wesentlich für die Erfindung ist deshalb die Erkenntnis, daß es möglich ist, im Rahmen der klinisch-chemischen Analytik mit einem auf diesem Gebiet vertretbaren (relativ geringen) Aufwand NIR-Absorptionsmessungen so auszuwerten, daß die Temperatur in den Reaktionsgefäßen mit ausreichender Genauigkeit bestimmt werden kann.

Wie oben erwähnt, eignet sich die Erfindung insbesondere für Analysegeräte, bei denen als physikalisch nachweisbare Veränderung eine optische Absorption bestimmt wird. In diesem Fall wird zweckmäßigerweise die ohnehin vorhandene wellenlängenselektive Absorptionsmeßeinrichtung verwendet, um auch die für die Temperaturbestimmung erforderlichen Absorptionsmessungen durchzuführen. Der Temperaturmeßschritt kann dabei gleichzeitig oder in engem zeitlichem Zusammenhang mit der für die Analyse erforderlichen Absorptionsmessung in der gleichen optischen Meßküvette erfolgen. Vorzugsweise unterscheiden sich jedoch die Wellenlängen, bei denen die Absorptionsmessung für die Analyse durchgeführt wird, von denen, bei denen die Temperaturbestimmung durchgeführt wird. Erstere können auch in anderen Spektralbereichen, insbesondere im Bereich des sichtbaren Lichts liegen.

Wesentlich für die Erfindung ist ein gutes (rauscharmes) Absorptions-Meßsignal. Es muß deswegen eine Lichtquelle ausreichend hoher Intensität und ein empfindlicher und stabiler optischer Sensor verwendet werden. Der Strahlengang vom Sender bis zum Empfänger der elektromagnetischen Strahlung sollte möglichst verlustarm sein.

Zur Gewinnung des Kalibrationsdatensatzes wird die Absorption A (l,T) in Abhängigkeit von der Wellenlänge l und der Temperatur T gemessen. Die Temperaturen, für die eine Kalibrationsmessung erfolgt, sollten über den interessierenden Temperaturbereich gleichmäßig verteilt sein.

Vorzugsweise wird die optische Absorption in dem Temperaturkalibrationsschritt an jedem Meßpunkt (d.h. für jede Kalibratorflüssigkeit und jede Kalibrationstemperatur) mehrfach bei jeder Meßwellenlänge gemessen. Die durch diese Mehrfachmessung und nachfolgende Mittelung der Meßwerte resultierende Verbesserung des Meßsignals hat sich als sehr wichtig für die Erreichung einer guten Meßgenauigkeit erwiesen. Die Zahl der Messungen für jeden Meßpunkt (und jeweils alle Wellenlängen) sollte mehr als fünf, vorzugsweise mehr als zehn betragen.

Auch in dem Temperaturmeßschritt erfolgt bevorzugt eine entsprechende Mehrfachmessung an jeder Testflüssigkeit, deren Temperatur bestimmt werden soll und für alle Meßwellenlängen. Hier kann die Zahl der Messungen geringer sein, jedoch liegt sie vorzugsweise ebenfalls über fünf.

Hinsichtlich der Wellenlängen wurde im Rahmen der Erfindung festgestellt, daß es möglich ist, mit nur zwei Wellenlängen zu arbeiten. Dabei kann aus den in dem Temperaturkalibrationsschritt gewonnenen Absorptionswerten mit verhältnismäßig einfachen mathematischen Mitteln eine Kalibrationsgerade oder einfache Kalibrationskurve berechnet werden, wobei der Kalibrationsdatensatz in diesem Fall als Koeffizienten der Gleichung der Kalibrationskurve abgespeichert wird.

Aufwendigere mathematische Auswerteverfahren erlauben es jedoch auch, die Absorptionsspektren in einem größeren oder höher aufgelösten Spektralbereich für die Temperaturbestimmung zu verwenden. In diesem Fall werden bei dem Temperaturkalibrationsschritt für eine Vielzahl von Temperaturen Absorptionsspektren im gesamten NIR oder in einem oder mehreren Teilbereichen davon aufgenommen. Die dabei gewonnenen Kalibrationsdaten werden mit einem mathematischen Regressionsverfahren komprimiert. Im Rahmen der Erfindung eignen sich beispielsweise verschiedene Verfahren der multivariaten Analyse. Als praktisch geeignet hat sich insbesondere die PLS (partial least square)-Regression erwiesen. Dabei wird die Vielzahl der Eingangsgrößen auf zwei verhältnismäßig kleine Matrizen reduziert, welche beispielsweise Vektoren und zugehörige Faktoren darstellen. Diese Daten werden als Kalibrationsdatensatz abgespeichert. In dem Temperaturmeßschritt werden aus dem gemessenen Spektrum und der Vektorenmatrix Faktoren der Faktorenmatrix ermittelt. Hieraus werden durch Vergleich mit der Faktorenmatrix des Kalibrationsdatensatzes die Temperaturen abgeleitet.

Einzelheiten dieser mathematischen Verfahren müssen hier nicht beschrieben werden, weil sie aus der einschlägigen Literatur bekannt sind. Verwiesen sei insbesondere auf das Buch von H. Martens, und T. Naes: "Multivariate Calibration", John Wiley and Sons, 1991, Seite 97 bis 125 und die US Patentschrift 4,660,151.

Die bei dem Temperaturkalibrationsschritt verwendete Kalibratorflüssigkeit muß hinsichtlich ihrer optischen Absorptionseigenschaften bei den benutzten Wellenlängen mit der Testflüssigkeit, deren (unbekannte) Temperatur bestimmt werden soll, übereinstimmen. In der Zusammensetzung bestehen unvermeidlich insofern Unterschiede, als die Testflüssigkeit eine unbekannte Konzentration der zu analysierenden Komponente enthält. Diese Konzentrationsunterschiede sind jedoch, bezogen auf die Gesamtheit der Testflüssigkeit, sehr gering. Praktische Versuche haben ergeben, daß im Rahmen dieser Konzentrationsschwankungen sich die optischen Absorptionseigenschaften so wenig ändern, daß die Genauigkeit der Temperaturbestimmung hierdurch nur sehr geringfügig beeinflußt wird. Um den Einfluß der Probe zu minimieren, kann es jedoch zweckmäßig sein, einen Satz von Kalibratorflüssigkeiten zu verwenden, der die relevanten Probenbestandteile in ihrem erwarteten Konzentrationsbereich enthält (d.h. zum Beispiel der Schwankungsbereich der Proteinkonzentrationen oder Trübungen wird durch den Kalibratorsatz abgedeckt).

Vorzugsweise sollte eine Kalibratorflüssigkeit verwendet werden, die sämtliche für die optische Absorption bedeutsamen Bestandteile des Reagenzssystems zur Bestimmung der zu analysierenden Komponente enthält. Soweit das Material der Küvetten, in denen die Absorption der Testflüssigkeit bestimmt wird, nicht völlig reproduzierbar ist (vor allem bei Verwendung von disposiblen, nur einmal verwendbaren Küvetten) ist es darüber hinaus zweckmäßig, auch in dem Kalibrationsschritt mehrere Messungen durchzuführen, bei denen sich die Kalibratorflüssigkeit in unterschiedlichen Küvetten befindet. Der Kalibrationsschritt kann dabei, wie weiter unten noch näher erläutert wird, in zwei Teilschritte geteilt sein, wobei in dem ersten Teilschritt die genannten besonderen Einflüsse berücksichtigt werden, während der zweite Teilschritt sich auf eine Nachkalibration im Hinblick auf Gerätemeßfehler konzentriert.

Das erfindungsgemäße Verfahren ermöglicht eine direkte Bestimmung der Temperatur der Flüssigkeit praktisch ohne zeitliche Verzögerung (weniger als eine Sekunde) oder Verfälschung des Meßwertes durch Wärmeübergänge. Dadurch ist es möglich, die Testflüssigkeit sehr schnell auf die gewünschte Temperatur zu bringen. Die Regelkonstanten einer Temperaturregelung können wesentlich kürzer sein als bei vorbekannten Verfahren. Es können auch Verfahren verwendet werden, bei denen die Wärme direkt in der Testflüssigkeit erzeugt wird, wie beispielsweise die Erwärmung mit Ultraschall oder durch Infrarotbestrahlung. Da die Temperatur mehrerer in einem Analysegerät verwendeter Küvetten unabhängig voneinander individuell kontrolliert werden kann, ist es problemlos möglich, die Temperatur individuell den Erfordernissen des jeweiligen Testes anzupassen.

In der allgemeinsten Ausführungsform der Erfindung muß die aus der Reaktion der Probe mit dem Reagenzsystem resultierende physikalisch meßbare Veränderung, welche als für den Analysewert der Probe charakteristische Meßgröße gemessen wird, nicht notwendigerweise in der gleichen optischen Küvette stattfinden, in der der Temperaturmeßschritt zur Bestimmung der Temperatur der Testflüssigkeit durchgeführt wird. Beispielsweise kann es in einem Analyseverfahren erforderlich sein, die Temperatur einer Vorreaktion zu überwachen, wobei man im Rahmen der Erfindung diese Vorreaktion in einer optischen Küvette stattfinden läßt und die Temperatur der darin enthaltenen Testflüssigkeit erfindungsgemäß bestimmt wird. Bevorzugt findet jedoch die Messung der für die Analyse charakteristischen Meßgröße und die Temperaturbestimmung mit Hilfe des Temperaturmeßschrittes in der gleichen optischen Küvette und zum gleichen Zeitpunkt (oder mit engem zeitlichem Abstand) statt. Sofern die Meßgröße die optische Absorption ist, sollte sich dabei die Wellenlänge, bei der die Meßgröße gemessen wird, von den Wellenlängen des erfindungsgemäßen Temperaturmeßschritts unterscheiden.

Wenn die Messung der Meßgröße und die erfindungsgemäße Temperaturbestimmung in der gleichen optischen Küvette stattfindet, kann man vorteilhaft so vorgehen, daß man unter Verzicht auf eine aufwendige Thermostatisierung die Meßgröße bei einer nicht exakt vorherbestimmten Temperatur mißt und den zu einem bestimmten Zeitpunkt gemessenen Wert der Meßgröße mittels der im wesentlichen zeitgleich in einem Temperaturmeßschritt aus Absorptionsdaten bestimmten Temperatur der Testflüssigkeit korrigiert. "Im wesentlichen zeitgleich" ist dabei so zu verstehen, daß der zeitliche Zusammenhang eng genug ist, um eine Beeinträchtigung der Meßgenauigkeit durch eine zwischen den beiden Meßzeitpunkten stattfindende Temperaturänderung auszuschließen.

Von besonderer Bedeutung ist diese Ausführungsform bei Tests, bei denen eine Reaktionskinetik als Maß für die Konzentration des Analyten in der Probe bestimmt wird. Beispielsweise wird bei der Bestimmung von Enzymkonzentrationen üblicherweise die zeitliche Änderung einer Meßgröße (meist der optischen Absorption der Flüssigkeit bei einer bestimmten Wellenlänge) bestimmt. Dies geschieht durch eine Reihe von Messungen zu aufeinanderfolgenden Zeitpunkten, wobei üblicherweise durch sehr aufwendige Thermostatisierungsmaßnahmen sichergestellt wird, daß während der gesamten Meßzeit der kinetischen Messung eine gewünschte Solltemperatur (meist 37° C) exakt eingehalten wird. Im Rahmen der vorliegenden Erfindung kann statt dessen auf eine sehr genaue Thermostatisierung verzichtet werden, d.h. es wird akzeptiert, daß sich die Ist-Temperatur in der optischen Küvette von der an sich gewünschten Solltemperatur unterscheidet. Durch die erfindungsgemäß mögliche praktisch verzögerungsfreie Messung exakt am Ort der optischen Absorptionsmessung können die bei einer abweichenden Ist-Temperatur gemessenen Werte der Meßgröße in entsprechende Werte bei der Solltemperatur umgerechnet und diese umgerechneten Werte der weiteren Verarbeitung zu dem gesuchten Analysewert zugrundegelegt werden.

Die Durchführung der Umrechnung kann mit Hilfe der heute verfügbaren Microcomputertechnik auf verschiedenerlei Weise erfolgen. Beispielsweise kann in einem Speicher des Microcomputers eine Tabelle oder ein funktionaler Zusammenhang zwischen der Meßgröße und der Temperatur zur Umrechnung der bei der Ist-Temperatur gemessenen Meßgröße in den entsprechenden Wert bei der Solltemperatur für den jeweiligen Parameter abgespeichert sein.

In der DE-B-28 20 441 ist für den auch im Rahmen der vorliegenden Erfindung bevorzugten Fall der kinetischen Bestimmung der Geschwindigkeit einer Enzymreaktion beschrieben, daß eine Korrektur der gemessenen Extinktionswerte mit Hilfe eines Temperaturkoeffizienten erfolgen soll, welcher in Abhängigkeit von der gemessenen Ist-Temperatur laufend verändert wird. Die Ist-Temperaturmessung erfolgt mit einem in die Küvette eingetauchten Thermoelement. Will man dabei die Temperatur in der gleichen optischen Meßzelle bestimmen, in der auch die Extinktionsmessung stattfindet, so muß der Temperaturmeßfühler in die optische Küvette eingetaucht und vor der Extinktionsmessung wieder aus ihr entfernt werden, weil er sonst die optische Messung stört. Dadurch stimmt jedoch der Meßzeitpunkt der Temperaturmessung und der Meßzeitpunkt, zu dem die Meßgröße bestimmt wird, nicht exakt überein. Hinzu kommt, daß an dem Temperaturmeßfühler anhaftende Flüssigkeit von einer Küvette in die nächste übertragen wird ("Verschleppung") und übliche Temperaturmeßfühler eine erhebliche Trägheit haben. Wenn man umgekehrt die Temperaturmessung aus dem optischen Strahlengang herausverlegt, stimmt der Meßort der Temperaturmessung mit dem Meßort der Extinktionsmessung nicht überein. Auch hieraus können Verfälschungen aufgrund von Temperaturgradienten resultieren. Hinzu kommt der zusätzliche Aufwand für die erforderliche exakte Temperaturmessung.

Im Rahmen der vorliegenden Erfindung ist es dagegen möglich, die Meßgröße (insbesondere eine optisch meßbare Meßgröße) und die Temperatur in der gleichen Küvette in sehr engem räumlichem und zeitlichem (wenige Millisekunden) Zusammenhang zu bestimmen. Dadurch wird, insbesondere bei der Analyse von Enzymen und anderen kinetischen Analysemethoden, eine sehr hohe Genauigkeit ohne die bisher bei derartigen Verfahren erforderliche außerordentlich aufwendige Thermostatisierung möglich. Überraschenderweise ist die Temperaturbestimmung auf Basis einer Absorptionsmessung im NIR-Bereich praktisch zeitgleich mit einer bei einer anderen Wellenlänge stattfindenden Messung einer sich zeitlich ändernden Absorption an der gleichen Probe möglich.

Die Erfindung wird im folgenden anhand eines in den Figuren dargestellten Ausführungsbeispiels näher erläutert; es zeigen:

Fig. 1          Eine Prinzipsskizze einer für die Erfindung geeigneten Vorrichtung,

Fig. 2 und Fig. 3     das NIR-Spektrum einer Probe bei zwei verschiedenen Temperaturen, wobei Fig. 3 eine Ausschnittsvergrößerung von Fig. 2 darstellt,

Fig. 4 und Fig. 5     graphische Darstellungen der Meßergebnisse für zwei verschiedene Ausführungsformen der Erfindung.

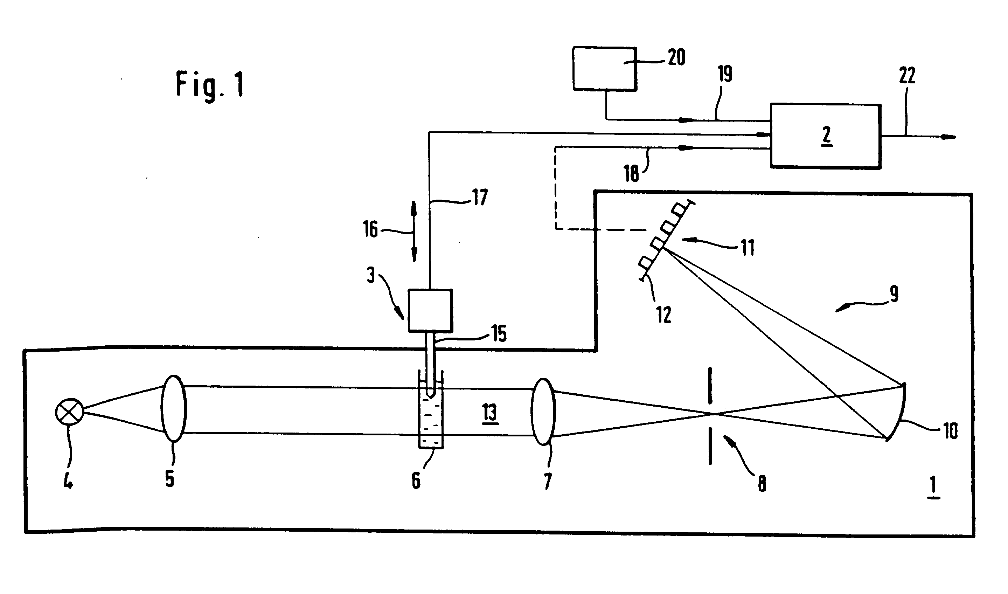

Die in Figur 1 dargestellte Anordnung enthält die wesentlichen Elemente, die erforderlich sind, um in einem Analysegerät die Temperatur aus NIR-Absorptionsspektren zu bestimmen, nämlich eine wellenlängenselektive Absorptionsmeßeinrichtung 1, eine Computereinheit 2 und eine Temperaturmeßeinrichtung 3.

Die wellenlängenselektive Absorptionsmeßeinrichtung 1 weist die üblichen Bestandteile eines Spektralphotometers auf, nämlich einen Sender 4 mit einer hohen Intensität im NIR-Bereich (z.B. Halogenlampe), ein aus Linsen 5,7 und einem Spalt 8 bestehendes Abbildungssystem, ein optisches Beugungsgitter 10 und einen Empfänger 11, der im dargestellten Fall als Detektorleiste 12 mit mehreren linear angeordneten Detektoren ausgebildet ist. Dadurch kann mit einem statischen Beugungsgitter 10 ein Spektrum mehrkanalig simultan aufgenommen werden.

Es können auch andere selektive Absorptionsmeßeinrichtungen anstelle des dargestellten Typs verwendet werden. Selbstverständlich kann man mit nur einem Strahlungsempfänger 11 arbeiten, der fest positioniert ist und das von einem schwenkbaren Gitter oder Prisma auftreffende Spektrum einkanalig aufnimmt. Die Wellenlängenselektionseinrichtung der Absorptionsmeßeinrichtung muß auch nicht eine kontinuierliche spektrale Zerlegung (wie ein Gitter oder ein Prisma) ermöglichen. Vielmehr kann auch mit Filtern und/oder wellenlängenselektiv emittierenden Lichtsendern und/oder Lichtempfängern die erforderliche Wellenlängenselektivität erreicht werden.

Grundsätzlich eignen sich also verschiedene Typen bekannter Spektralphotometer-Anordnungen für die Absorptionsmeßeinrichtung. Wesentlich ist dabei jedoch, daß das erzeugte Absorptionsspektrum ein gutes Signal-Rauschverhältnis aufweist.

Im Rahmen der klinischen Chemie müssen häufig sehr kleine Probenvolumina analysiert werden. Bei der experimentellen Erprobung der Erfindung wurden beispielsweise Küvetten mit einem Flüssigkeitsvolumen von weniger als 50 µl eingesetzt, deren Meßfenster nur 1 x 1 mm groß war. Dabei hat sich die Verwendung einer Lichtleiteroptik bewährt, bei der das Licht mit einem Lichtleiter von dem Lichtsender zu der Küvette geführt und das aus der Küvette austretende Licht mit einem zweiten Lichtleiter zu dem Meßempfänger geleitet wird. Durch bekannte mikrooptische Elemente an den der Küvette benachbarten Stirnseiten der Lichtleiter wird dabei sichergestellt, daß das aus dem ersten Lichtleiter durch die Küvette getrahlte Licht möglichst vollständig in den zweiten Lichtleiter eintritt.

Im Strahlengang 13 der Absorptionsmeßeinrichtung befindet sich wie üblich eine Küvette 6, die mit einer Flüssigkeit gefüllt ist, deren optische Absorption gemessen werden soll. Eine Besonderheit ist darin zu sehen, daß eine Temperaturmeßeinrichtung vorgesehen ist, die einen Temperatursensor aufweist, welcher in der optischen Küvette so angeordnet ist oder angeordnet werden kann, daß die Temperatur einer darin enthaltenen Kalibrationsflüssigkeit während einer wellenlängenselektiven Absorptionsmessung genau bestimmt werden kann.

Die praktische Realisierung dieser Maßnahme hängt von den Konstruktionsmerkmalen des jeweiligen Analysegerätes ab. Im dargestellten Fall ist die Temperaturmeßeinrichtung 3 vertikal beweglich (Pfeil 16), um den Temperatursensor 15 von oben in eine im Strahlengang 13 befindliche Küvette 6 einzutauchen. Dies ist vor allem bei solchen Analysegeräten möglich, bei denen die für die Analyse erforderliche optische Absorptionsmessung in den Reaktionsgefäßen selbst stattfindet. Die Reaktionsgefäße haben dabei meist eine röhrenförmige Form mit zumindet teilweise quadratischem oder rechteckigem Querschnitt und glasklaren Wänden und sind nach oben offen.

In Fällen, in denen es nicht möglich oder zweckmäßig ist, einen Temperatursensor 15 in die Küvette 6 einzutauchen, kann eine spezielle Temperaturkalibrationsküvette in einer beweglichen Halterung vorgesehen sein, die immer dann, wenn ein Temperaturkalibrationsschritt durchgeführt werden soll, in den Strahlengang 13 bewegt wird. Eine solche Temperaturmeßküvette kann innenseitig einen fest fixierten Temperaturmeßsensor aufweisen. Alternativ kann der Strahlengang auch auf eine fest installierte Temperaturmeßküvette umgelenkt werden.

Die Herstellung und Zuführung der für die Temperaturkalibration erforderlichen Kalibratorflüssigkeit läßt sich problemlos mit den Mitteln realisieren, die bei Analysegeräten gebräuchlich sind, um das Reaktionsgemisch herzustellen. Jedes Analysegerät hat zu diesem Zweck ein sogenanntes "Liquid-Handling"-System bestehend aus stationären oder beweglichen Pipettoren, Dispensoren, Vorratsflaschen, Schläuchen, Pumpen und dergleichen, welches vorteilhaft auch zur Bereitstellung der Temperaturkalibratorlösung verwendet werden kann.

Die Temperaturmeßeinrichtung 3 erzeugt Temperaturmeßsignale, die über die Leitung 17 der Computereinheit 2 zugeführt werden, an welcher über eine Leitung 18 auch die Signale des Empfängers 11 der Absorptionsmeßeinheit 1 anliegen. Über eine dritte Inputleitung 19 ist der Computer an eine Codeleseeinheit 20 angeschlossen. Die Ausgabe der Daten aus dem Computer aus der Computereinheit 2 erfolgt über eine Outputleitung 22 auf ein nicht dargestelltes Display bzw. zur Weiterverarbeitung der Temperaturmeßdaten.

Die erfindungsgemäße Temperaturmessung erfolgt in zwei Schritten.

Zunächst wird in dem Temperaturkalibrationsschritt die optische Absorption einer in der Küvette 6 befindlichen Kalibratorflüssigkeit für mindestens zwei Wellenlängen, vorzugsweise für eine Vielzahl von Wellenlängen in einem größeren Spektralbereich, bestimmt. Dies wird für eine größere Anzahl unterschiedlicher und im interessierenden Temperaturbereich gleichmäßig verteilter Temperaturen wiederholt. Dabei wird jeweils mit dem Temperatursensor 15 die Temperatur gemessen. Die Computereinheit 2 registriert und speichert die Temperaturen und die Absorptionswerte in Abhängigkeit von Wellenlänge und Temperatur (A (l,T)). Hieraus wird in der Computereinheit 2 ein Kalibrationsdatensatz gewonnen und abgespeichert.

Wie erwähnt ist es für die Erfindung wichtig, daß die Kalibratorflüssigkeit und die Testflüssigkeit hinsichtlich ihrer Absorptionseigenschaften bei den Meßwellenlängen praktisch vollständig übereinstimmen. Dies ist bei Analysegeräten vor allem dann nicht leicht zu realisieren, wenn das Gerät zur Analyse unterschiedlicher Parameter verwendet wird, für die völlig verschiedene Reagenzsysteme zum Einsatz kommen. In diesem Fall kann eine parameterspezifische Temperaturkalibration erforderlich sein, bei welcher der Kalibrationsschritt für jede zu analysierende Komponente getrennt durchgeführt wird, wobei die Kalibratorflüssigkeit jeweils sämtliche für die optische Absorption bedeutsamen Bestandteile des zur Bestimmung der jeweiligen Komponente vorgesehenen Reagenzsystems enthält.

Um eine solche parameterspezifische Temperaturkalibration auf dem Analysegerät selbst durchzuführen, ist es erforderlich, für jeden Parameter die geeignete Kalibratorflüssigkeit vorrätig zu halten oder von Fall zu Fall herzustellen und jeweils einen parameterspezifischen Kalibrationsschritt durchzuführen, wenn die Temperatur einer Testflüssigkeit mit dem Reagenzsystem dieses Parameters bestimmt werden soll. Dies erfordert eine aufwendige Konstruktion des Analysegerätes und reduziert dessen Analyseleistung, weil relativ häufig Temperaturkalibrationsschritte durchgeführt werden müssen.

Vorzugsweise findet deswegen der Temperaturkalibrationsschritt in Form von zwei Teilschritten mit räumlichem und zeitlichem Abstand statt. Es wird nämlich ein erster Teilschritt unabhängig von dem Analysegerät zweckmäßigerweise vom Hersteller des Reagenzsystems durchgeführt, bei dem ein parameterspezifischer Kalibrationsdatensatz bestimmt wird. Dies sollte für jede Produktionscharge eines Reagenzsystems gesondert geschehen, um auch produktionsbedingte Unterschiede von Charge zu Charge bei der Temperaturkalibration zu berücksichtigen. Der so gewonnene parameterspezifische Kalibrationsdatensatz wird in maschinenlesbarer Form, beispielsweise als Magnetcodekarte, zusammen mit dem Reagenzsystem an den Benutzer des Analysegerätes geliefert und mit Hilfe der Codeleseeinheit 20 über die Leitung 19 an die Computereinheit 2 übermittelt.

Diese chargenspezifische, jedoch geräteunabhängig durchgeführte Temperaturkalibration kann die Eigenschaften des jeweiligen Reagenz vollständig berücksichtigen. Gerätebedingte Fehlerquellen, wie beispielsweise Fertigungstoleranzen, Drift und Schwankungen der Absorptionsmeßeinrichtung werden dabei jedoch nicht erfaßt. Deswegen ist auf dem Gerät ein zusätzlicher parameterneutraler Kalibrationsschritt erforderlich, bei dem die optische Absorption an einer parameterneutralen Kalibratorflüssigkeit (zum Beispiel Wasser) bei mindestens einer bekannten Temperatur bestimmt wird. Dabei wird vorzugsweise eine langfristig stabile Kalibratorflüssigkeit für den in dem Gerät ablaufenden Teilschritt der Temperaturkalibration verwendet. Sie befindet sich vorteilhaft in einer geschlossenen Temperaturkalibrationsküvette mit fest integriertem Temperaturmeßsensor und wird jeweils zur Durchführung des Teilschrittes in den Strahlengang gebracht. Unter Umständen kann statt einer Kalibratorflüssigkeit auch ein anderes Kalibratormedium, insbesondere Luft, in dem zweiten Kalibrationsschritt verwendet werden.

Bei dem Kalibrationsschritt (bzw., falls dieser in zwei Teilschritten durchgeführt wird, bei jedem der Teilschritte) muß selbstverständlich die Temperatur der Kalibratorflüssigkeit bzw. des Kalibrationsmediums sehr exakt bestimmt werden. Die hierfür erforderlichen Techniken (hochpräzise Temperaturmeßelemente wie beispielsweise Thermistoren, ausreichend hohe Wärmekapazität des Behältnisses, sorgfältige Einstellung des thermischen Gleichgewichts) sind bekannt.

Bei dem Temperaturmeßschritt wird die optische Absorption der in der Küvette 6 befindlichen Testflüssigkeit bei den gleichen Wellenlängen gemessen und ihre Temperatur durch Vergleich der dabei gemessenen Absorption A (l) bei unbekanntem T mit dem Kalibrationsdatensatz bestimmt. Dieser Vergleich wird in der Computereinheit 2 mit üblichen Mitteln der Datenverarbeitung durchgeführt, wobei unterschiedliche mathematische Verfahren (Algorithmen) verwendet werden können, wie nachfolgend an zwei Beispielen erläutert wird.

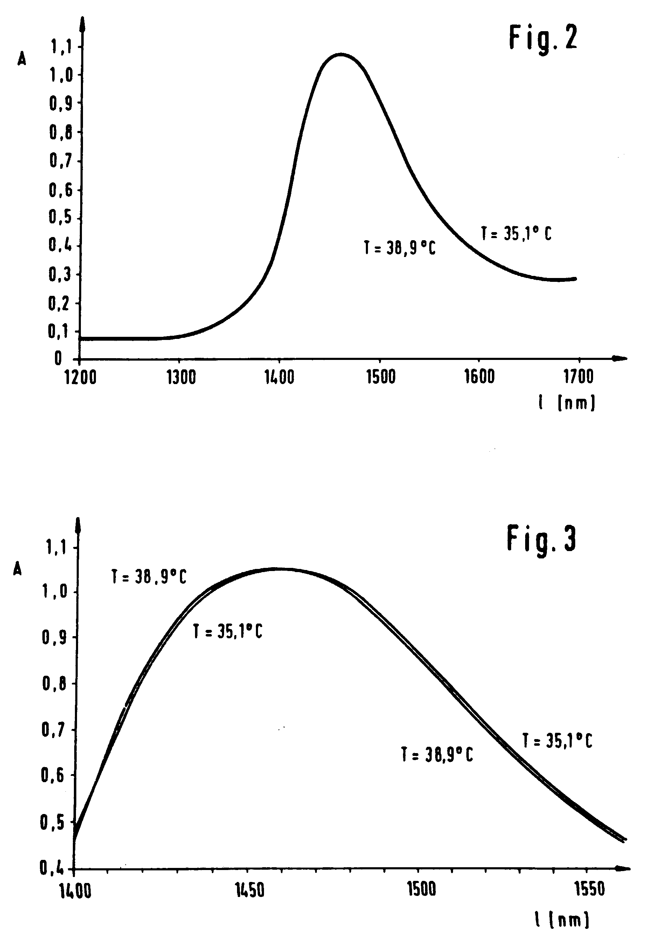

Fig. 2 und Fig. 3 zeigen das Absorptionsspektrum einer 10%igen Lösung von RSA (Rinderserumalbumin) bei zwei verschiedenen, in der Figur angegebenen Temperaturen. Der Unterschied ist so gering, daß er nur in der Ausschnittsvergrößerung (Fig. 3) erkennbar ist.

Dennoch wurde gefunden, daß schon mit Hilfe der Absorptionswerte bei nur zwei festen Wellenlängen eine Temperaturbestimmung möglich ist.

Von der zuvor erwähnten RSA-Lösung wurden 36 Spektren zwischen etwa 1200 nm und 1700 nm bei unterschiedlichen Temperaturen aufgenommen, die zwischen 35°C und 39°C etwa gleichmäßig verteilt waren. Die Temperatur in der Küvette wurde dabei mit einem NTC-Widerstand bestimmt, wobei durch Verwendung einer nichtlinearen Eichkurve eine Standardabweichung der NTC-Temperaturmessung von 0,02°C erreicht wurde. Bei dem verwendeten Spektralphotometer wurde das Gesamtspektrum in 266 Wellenlängen digitalisiert (d.h. jedes Spektrum bestand aus den Absorptionswerten für 266 Wellenlängen im untersuchten Spektralbereich).

Diese Kalibrationsdaten wurden an eine bilineare Kalibrationsgleichung der allgemeinen Formel

$$(1) \qquad T = C_o + C_1 A_1 + C_2 A_2$$

angepaßt. Dabei wurden alle 35.245 verschiedenen Kombinationen von zwei der 266 verschiedenen Wellenlängen für die bilineare Kalibration berechnet. Die Wellenlängenkombination mit der geringsten Standardabweichung wurde als Kalibrationsdatensatz für die Bestimmung unbekannter Temperaturen verwendet.

Dabei ergaben sich als optimale Kombination die Wellenlängen 1405 nm und 1534 nm mit der Kalibrationsgleichung

$$(2) \qquad T = 48,96°C + 156,78°C \times A_{1405nm} - 165,81°C \times A_{1534nm}$$

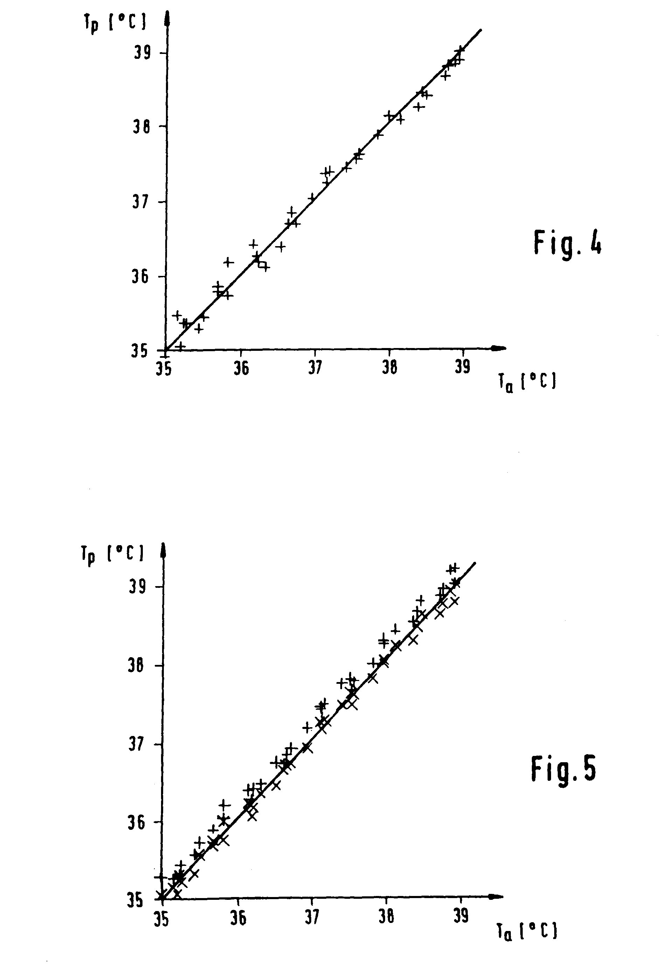

Die Ergebnisse der Temperaturbestimmung sind in Fig. 4 dargestellt.

Dabei ist die aus den Absorptionswerten von zwei Wellenlängen mit Hilfe der Gleichung (2) berechnete Temperatur $T_p$ gegen die mit dem NTC gemessene Temperatur $T_a$ aufgetragen. Die Meßpunkte streuen gleichmäßig um die eingezeichnete Gerade mit der Steigung 1. Die Standardabweichung beträgt 0,14°C.

Die Auswahl der Wellenlängen erfolgte bei diesem Beispiel mit einem statistischen Verfahren. Der Vergleich mit Fig. 2 und Fig. 3 zeigt, daß die Wellenlänge 1405 nm an der kurzwelligen Flanke und die Wellenlänge 1534 nm an der langwelligen Flanke der Absorptionsbande liegt. Da die Temperaturabhängigkeit der Absorption an beiden Flanken der Absorptionsbande ein entgegengesetztes Vorzeichen hat (Fig. 3), führt diese Auswahl der Wellenlängen in Verbindung mit der Differenzbildung zu einem größeren Temperatur-Meßsignal. Außerdem ist wichtig, daß durch die Differenzbildung sämtliche additiven Meßfehler eliminiert werden.

Es kann auch vorteilhaft sein, die Wellenlängen, bei denen die optische Absorption gemessen wird, so festzulegen, daß eine Wellenlänge in einer Absorptionsbande und eine zweite Wellenlänge außerhalb der Absorptionsbanden des Wassers liegt. Auch auf diese Weise läßt sich durch Differenzbildung zwischen den beiden Absorptionswerten ein relativ großes Temperatur-Meßsignal bei Unterdrückung additiver Fehlerbeiträge erreichen.

Fig. 5 zeigt die Ergebnisse, die aus den gleichen Kalibrations- und Meßdaten mit einem anderen mathematischen Vergleichsverfahren, nämlich der PLS-Regression (als ein Beispiel einer multivariaten Analyse) gewonnen wurden. Dabei wurden 36 Kalibrationsspektren jeweils für alle 266 Wellenlängen verwendet. Die +-Zeichen markieren die Ergebnisse einer PLS-Analyse mit zwei Faktoren, die x-Zeichen die Ergebnisse einer Analyse mit drei Faktoren. Bei Berücksichtigung von drei Faktoren ergab sich eine Standardabweichung von 0,08°C.

Erwartungsgemäß ergibt sich bei der Verwendung der vollständigen Spektren mit Hilfe einer multivariaten Analyse eine bessere Korrelation und damit eine bessere Genauigkeit der Temperaturbestimmung als bei nur zwei festen Wellenlängen. Da jedoch Analysegeräte in der Praxis vielfach mit Spektralphotometern ausgestattet sind, die nur bei einigen wenigen festen Wellenlängen messen können, ist die Erkenntnis besonders wichtig, daß für die Temperaturbestimmung aus Absorptionsmessungen die Kenntnis des Spektrums in einem breiteren Spektralbereich nicht unbedingt erforderlich ist. Es genügt, die ohnehin vorhandene Absorptionseinrichtung so zu modifizieren, daß die Absorption bei den für die Temperaturbestimmung erforderlichen Wellenlängen im NIR-Bereich bestimmt werden kann.

Insgesamt zeigt sich, daß auch in Gegenwart einer kritischen, die Absorption stark beeinflussenden und für Testsysteme in der medizinischen Analytik typischen Störsubstanz wie RSA die Temperatur einer Testflüssigkeit aus den Absorptionsspektren mit einer erstaunlich guten Genauigkeit bestimmt werden kann.

In weiteren Versuchen wurde die Erfindung unter zusätzlich erschwerten Randbedingungen experimentell erprobt.

Es wurden disposible Miniküvetten verwendet, deren Meßfenster nur 1 x 1 mm groß war. Die Länge des optischen Weges in der Küvette betrug 5 mm, ihr Volumen 50 µl.

In diesen Küvetten wurden Versuchsmischungen untersucht, die aus handelsüblichen Reagenzsystemen zur Bestimmung von Magnesium, Cholesterin, Creatinin und Triglyzeriden und unterschiedlichen (praktischen Werten entsprechenden) Proteinkonzentrationen bestanden. Die genannten Analyseparameter sind dabei so ausgewählt, daß die Reagenzsysteme besonders kritische Bestandteile, beispielsweise einen hohen Proteingehalt, einen im langwelligen Bereich absorbierenden Farbstoff, einen hohen Salzgehalt oder insgesamt eine besonders komplexe Reagenzzusammensetzung enthalten.

Die Absorptionsmessungen in dem Kalibrationsschritt und in dem Temperaturmeßschritt erfolgten an getrennt zubereiteten Versuchsmischungen in jeweils neuen disposiblen Küvetten bei Wellenlängen zwischen 1030 nm und 1390 nm.

Die Kalibration erfolgte parameterspezifisch, wobei die Kalibratorflüssigkeit jeweils das gesamte Reagenzsystem, jedoch kein Serumprotein, enthielt. Bei der Kalibration wurde die Temperatur zwischen 35°C und 39°C in Schritten von 0,1° (teilweise 0,2°) verändert, wobei jeweils 50 Messungen über den gesamten Wellenlängenbereich ("Scans") mit einer Wellenlängenauflösung von 32 cm$^{-1}$ bzw. bei dem Triglyzerid-Test 64 cm$^{-1}$ gemessen wurden. Die Kalibrationsdaten wurden mit einem PLS-Regressionsverfahren verarbeitet. Die optimale Zahl der Faktoren der PLS-Matrix wurde durch Kreuzvalidierung bestimmt und betrug vier bei Creatinin und Triglyceride oder fünf bei Magnesium und Cholesterin.

Bei dem Temperaturmeßschritt an Versuchsmischungen unbekannter Temperatur wurden acht oder elf Scans mit 32 cm$^{-1}$ Auflösung bzw. dreizehn Scans mit 64 cm$^{-1}$ Auflösung gemessen. Die Meßzeit lag dabei jeweils unter fünf Sekunden.

Mit einem handelsüblichen FT-NIR-Spektrometer und unter Verwendung eines kommerziell erhältlichen PLS-Algorithmus (LabCalc PLSPlus von Galactyc Industries) wurden für die unterschiedlichen Reagenzsysteme folgende Standardabweichungen zwischen konventionell gemessener und erfindungsgemäß bestimmter Temperatur in Grad C erreicht.

Tabelle 1

| Reagenzsystem | Standardabweichung (°C) |
|---|---|
| Magnesium | 0,071 |
| Cholesterin | 0,083 |
| Creatinin | 0,078 |
| Triglyceride | 0,069 |

Insgesamt ergibt sich also, daß auch unter den beschriebenen erschwerten Randbedingungen die Temperatur mit einer Genauigkeit von besser als 0,1°C bestimmt werden kann.

**Patentansprüche**

1.  Verfahren zur Analyse einer medizinischen Probe, insbesondere einer Körperflüssigkeit, mit Hilfe eines Analysegerätes, bei welchem

    sich in einer optischen Küvette in dem Analysegerät eine Testflüssigkeit befindet, welche einen aliquoten Teil der Probe und Reagenzien enthält, die mindestens ein Teil eines für die Analyse der Komponente spezifischen Reagenzsystems sind, und
    die Temperatur der Testflüssigkeit in der Küvette bestimmt wird, wobei

    in einem Temperaturkalibrationsschritt die optische Absorption einer Kalibratorflüssigkeit bei mindestens zwei Wellenlängen im NIR-Bereich bei verschiedenen Temperaturen bestimmt wird, um einen Kalibrationsdatensatz hinsichtlich der Temperaturabhängigkeit der optischen Absorption zu gewinnen, und
    in einem Temperaturmeßschritt die optische Absorption der Testflüssigkeit von unbekannter Temperatur in der optischen Küvette bei den gleichen Wellenlängen gemessen und ihre Temperatur durch Vergleich der in dem Meßschritt gewonnenen Absorptionsdaten mit dem Kalibrationsdatensatz bestimmt wird.

2.  Verfahren nach Anspruch 1, bei welchem die optische Absorption in dem Temperaturkalibrationsschritt an einer bestimmten Kalibratorflüssigkeit und bei einer bestimmten Temperatur jeweils mehrfach gemessen wird.

3. Verfahren nach einem der vorhergehenden Ansprüche, bei welchem die optische Absorption in dem Temperaturmeßschritt an einer Testflüssigkeit zur Bestimmung eines Temperaturwertes jeweils mehrfach gemessen wird.

4. Verfahren nach einem der vorhergehenden Ansprüche, bei welchem die Wellenlängen, bei denen die optische Absorption gemessen wird, je eine Wellenlänge an der kurzwelligen und langwelligen Flanke einer Absorptionsbande des Wassers einschließen.

5. Verfahren nach einem der Ansprüche 1 bis 4, bei welchem die Wellenlängen, bei denen die optische Absorption gemessen wird, eine Wellenlänge in einer Absorptionsbande des Wassers und eine Wellenlänge außerhalb der Absorptionsbanden des Wassers einschließen.

6. Verfahren nach einem der vorhergehenden Ansprüche, bei welchem die Probe auf mehrere unterschiedliche Komponenten (Parameter) analysiert wird und zur Bestimmung eines parameterspezifischen Kalibrationsdatensatzes der Kalibrationsschritt für jede zu analysierende Komponente getrennt durchgeführt wird, wobei die Kalibrationsfüssigkeit jeweils sämtliche für die optische Absorption bedeutsamen Bestandteile des zur Bestimmung der jeweiligen Komponente vorgesehenen Reagenzsystems enthält.

7. Verfahren nach Anspruch 6, bei welchem der Kalibrationsschritt zwei Teilschritte einschließt, wobei in einem ersten Teilschritt, welcher unabhängig von dem Analysegerät durchgeführt wird, der parameterspezifische Kalibrationsdatensatz bestimmt wird und in einem zweiten Teilschritt in dem Analysegerät die optische Absorption an einem parameterneutralen Kalibrationsmedium für mindestens eine bekannte Temperatur bestimmt wird, um zusätzlich parameterneutrale Kalibrationsdaten zu erhalten.

8. Verfahren nach einem der vorhergehenden Ansprüche, bei welchem zum Vergleichen des in dem Temperaturkalibrationsschritt gewonnenen Kalibrationsdatensatzes mit den in dem Temperaturmeßschritt gewonnen Absorptionsdaten eine multivariate Analyse durchgeführt wird.

9. Verfahren nach einem der vorhergehenden Ansprüche, bei welchem die Reaktion der Probe und der Reagenzien zu einer physikalisch meßbaren, temperaturabhängigen Veränderung der Testflüssigkeit in der optischen Küvette führt, welche als für einen Analysewert der Probe charakteristische Meßgröße gemessen wird, die Messung der Meßgröße bei einer nicht exakt vorherbestimmten Temperatur stattfindet und eine Temperaturkorrektur der Meßgröße mittels der in dem Temperaturmeßschritt bestimmten Temperatur der Testflüssigkeit durchgeführt wird.

10. Verfahren nach Anspruch 9, bei welchem die Meßgröße die optische Absorption der Testflüssigkeit ist.

11. Verfahren nach Anspruch 9 oder 10, bei welchem die Meßgröße an einer Testflüssigkeit mehrfach nacheinander gemessen und die Temperaturkorrektur durchgeführt wird, um die zeitliche Änderung der Meßgröße bei einer Solltemperatur als Maß für eine Reaktionskinetik zu bestimmen.

12. Analysegerät zur Analyse von Proben von Körperflüssigkeiten auf eine darin enthaltene Komponente, welches aufweist:

eine optische Meßküvette (6) zur Aufnahme einer Testflüssigkeit, welche ein Aliquot der Probe und mindestens ein Reagenz enthält, das ein Teil eines für die Analyse der Komponente spezifischen Reagenzsystems ist, eine wellenlängenselektive Absorptionsmeßeinrichtung (1) zur Bestimmung der optischen Absorption einer in der optischen Meßküvette (6) befindlichen Testflüssigkeit bei mehreren unterschiedlichen Wellenlängen, welche einen Sender (4) zum Einstrahlen von elektromagnetischer Strahlung im NIR-Bereich in die Küvette, einen optischen Empfänger (11) zur Detektion der nach dem Durchgang durch die Küvette (6) durch optische Absorption modifizierten elektromagnetischen Strahlung und eine Wellenlängenselektionseinrichtung (10), um die elektromagnetische Strahlung auf vorbestimmte Wellenlängen im NIR-Bereich zu selektieren, einschließt, eine Temperaturmeßeinrichtung (3) mit einem Temperatursensor (15), der im Strahlengang der Absorptionsmeßeinrichtung so angeordnet ist oder angeordnet werden kann, daß die Temperatur eines darin enthaltenen Kalibrationsmediums während einer wellenlängenselektiven Absorptionsmessung an dem Kalibrationsmedium bestimmbar ist, um einen Kalibrationsdatensatz hinsichtlich der Temperaturabhängigkeit der optischen Absorption des Kalibrationsmediums zu gewinnen, der in einer Speichereinheit abgespeichert wird, und eine Computereinheit (2) zur Verarbeitung der Signale der Absorptionsmeßeinrichtung (1) und der Temperaturmeßeinrichtung (3), welche Vergleichsmittel einschließt, um die Temperatur der Testflüssigkeit in der optischen Meßküvette (6) durch Vergleich ihrer optischen Absorption bei mehreren Wellenlängen mit dem in der Speichereinheit abgespeicherten Kalibrationsdatensatz zu bestimmen.

## Claims

1. Method for the analysis of a medical sample, particularly a body fluid, with the aid of an analysing instrument in which,

   in an optical cuvette within the analysing instrument, there is a test fluid containing an aliquot part of the sample and reagents, which are at least a part of a specific reagent system for the analysis of the component, and the temperature of the test fluid is determined in the cuvette, wherein

   in a temperature calibration step the optical absorption of a calibrator fluid being determined at various temperatures at at least two wavelengths within the NIR range in order to obtain a calibration data set relating to the temperature-dependence of the optical absorption, and
   in a temperature-measuring step the optical absorption of the test fluid of unknown temperature being measured in the optical cuvette at the same wavelengths, and its temperature being determined by comparing the absorption data obtained in the measuring step with the calibration data set.

2. Method according to claim 1, in which the optical absorption in the temperature calibration step is measured a plurality of times on a specific calibrator fluid and a plurality of times at a specific temperature.

3. Method according to one of the preceding claims, in which the optical absorption in the temperature-measuring step is measured a plurality of times on a test fluid for the determination of a temperature value.

4. Method according to one of the preceding claims, in which the wavelengths at which the optical absorption is measured include one wavelength on the short-wave and one on the long-wave flank of an absorption band of water.

5. Method according to one of claims 1 to 4, in which the wavelengths at which the optical absorption is measured include a wavelength within an absorption band of water and a wavelength outside the absorption bands of water.

6. Method according to one of the preceding claims, in which the sample is analysed for a plurality of different components (parameters) and, for the determination of a parameter-specific calibration data set, the calibration step is carried out separately for each component to be analysed, the calibrator fluid containing, in each case, all constituents of the reagent system required for the determination of the particular component which are important for the optical absorption.

7. Method according to claim 6, in which the calibration step includes two partial steps, in a first partial step, which is performed independently of the analysing instrument, the parameter-specific calibration data set being determined, and in a second partial step within the analysing instrument the optical absorption on a parameter-neutral calibration medium being determined for at least one known temperature in order to obtain additionally parameter-neutral calibration data.

8. Method according to one of the preceding claims, in which, to compare the calibration data set obtained in the temperature calibration step with the absorption data obtained in the temperature-measuring step, a multivariate analysis is performed.

9. Method according to one of the preceding claims, in which the reaction of the sample and the reagents gives rise to a physically measurable, temperature-dependent change of the test fluid in the optical cuvette, which is measured as a measurable variable that is characteristic of an analytical value of the sample, the measurement of the measurable variable takes place at a not exactly predetermined temperature, and a temperature adjustment of the measurable variable is performed by means of the temperature of the test fluid determined in the temperature-measuring step.

10. Method according to claim 9, in which the measurable variable is the optical absorption of the test fluid.

11. Method according to claim 9 or 10, in which the measurable variable is measured on a test fluid a plurality of times in succession and the temperature adjustment is carried out in order to determine the time-dependent change of the measurable variable at a nominal temperature as a measure of a reaction kinetic.

12. Analytical instrument for the analysis of samples of body fluids for a component contained therein, said analytical instrument comprising:

an optical measuring cuvette (6) to accommodate a test fluid which contains an aliquot of the sample and at least one reagent which is a part of a reagent system specific for the analysis of the component, a wavelength-selective absorption-measuring device (1) for the determination of the optical absorption of a test fluid in the optical measuring cuvette (6) at a plurality of different wavelengths, which comprises a transmitter (4) for beaming electromagnetic radiation within the NIR range into the cuvette, an optical receiver (11) for the detection of the electromagnetic radiation modified by optical absorption after passage through the cuvette (6), and a wavelength-selection device (10) in order to select the electromagnetic radiation in accordance with predetermined wavelengths within the NIR range, a temperature-measuring device (3) with a temperature sensor (15) that is, or can be, disposed within the beam path of the absorption-measuring device so that the temperature of a calibration medium contained therein can be determined during a wavelength-selective absorption measurement on the calibration medium in order to obtain a calibration data set relating to the temperature-dependence of the optical absorption of the calibration medium, said calibration data set being stored in a storage unit, and a computer unit (2) for processing the signals of the absorption-measuring device (1) and the temperature-measuring device (3), which includes means of comparison in order to determine the temperature of the test fluid in the optical measuring cuvette (6) by comparing its optical absorption at a plurality of wavelengths with the calibration data set stored in the storage unit.

**Revendications**

1. Procédé pour l'analyse d'un prélèvement médical, en particulier un liquide corporel, à l'aide d'un appareil d'analyse, dans lequel

un liquide d'essai se trouve dans une cuvette optique dans l'appareil d'analyse, laquelle contient une aliquote du prélèvement et des réactifs qui constituent au moins une partie d'un système de réactifs spécifiques pour l'analyse d'un composant, et la température du liquide d'essai est déterminée dans la cuvette, procédé dans lequel

au cours d'une étape d'étalonnage de la température, l'absorption optique d'un liquide étalon est déterminée à au moins deux longueurs d'onde dans le domaine du proche infrarouge pour différentes températures, pour acquérir un enregistrement de données d'étalonnage de l'absorption optique en fonction de température, et au cours d'une étape de mesure de la température, l'absorption optique du liquide d'essai, de température inconnue, dans la cuvette optique est mesurée aux mêmes longueurs d'onde et sa température est déterminée en comparant les données d'absorption acquises lors de l'étape de mesure avec l'enregistrement des données d'étalonnage.

2. Procédé selon la revendication 1, dans lequel au cours de l'étape d'étalonnage de la température, l'absorption optique est mesurée dans tous les cas plusieurs fois pour un liquide étalon déterminé et à une température déterminée.

3. Procédé selon l'une quelconque des revendications précédentes, dans lequel au cours de l'étape de mesure de la température l'absorption optique est mesurée dans tous les cas plusieurs fois pour un liquide d'essai pour déterminer une valeur de la température.

4. Procédé selon l'une quelconque des revendications précédentes, dans lequel les longueurs d'onde, auxquelles la mesure de l'absorption optique est effectuée, comprennent à chaque fois une longueur d'onde au niveau du flanc de faible longueur d'onde et une autre au niveau du flanc de grande longueur d'onde d'une bande d'absorption de l'eau.

5. Procédé selon l'une quelconque des revendications 1 à 4, dans lequel les longueurs d'onde, auxquelles la mesure de l'absorption optique est effectuée, comprennent une longueur d'onde dans la bande d'absorption de l'eau et

EP 0 578 798 B1

une longueur d'onde en-dehors de la bande d'absorption de l'eau.

6. Procédé selon l'une quelconque des revendications précédentes, dans lequel le prélèvement est analysé en plusieurs composants différents (paramètres) et l'étape d'étalonnage est effectuée séparément pour chacun des composants à analyser pour déterminer un enregistrement de données d'étalonnage spécifique aux paramètres, dans lequel le liquide d'étalonnage contient respectivement tous les éléments significatifs pour l'absorption optique du système de réactifs prévus pour la détermination du composant respectif.

7. Procédé selon la revendication 6, dans lequel l'étape d'étalonnage inclut deux étapes partielles, dans une première étape partielle, qui est réalisée indépendamment de l'appareil de mesure, l'enregistrement des données d'étalonnage spécifique des paramètres est déterminé et dans une deuxième étape partielle l'absorption optique d'un milieu d'étalonnage paramétriquement neutre est déterminée dans l'appareil d'analyse pour au moins une température connue, afin d'obtenir des données d'étalonnage supplémentaires paramétriquement neutres.

8. Procédé selon l'une quelconque des revendications précédentes, dans lequel une analyse statistique à plusieurs variables est effectuée pour la comparaison de l'enregistrement des données acquis dans l'étape d'étalonnage de la température avec les données d'absorption acquises dans l'étape de mesure de la température.

9. Procédé selon l'une quelconque des revendications précédentes, dans lequel la réaction du prélèvement et des réactifs conduit à un changement physique mesurable dépendant de la température du liquide d'essai dans la cuvette optique, lequel est mesuré en tant que grandeur à mesurer caractéristique pour une valeur d'analyse du prélèvement, la mesure de la grandeur à mesurer s'effectuant à une température qui n'est pas prédéterminée avec précision et une correction en température de la grandeur à mesurer étant effectuée au moyen de la température du liquide d'essai déterminée dans l'étape de mesure de la température.

10. Procédé selon la revendication 9, dans lequel la grandeur à mesurer est l'absorption optique du liquide d'essai.

11. Procédé selon la revendication 9 ou 10, dans lequel la grandeur à mesurer est mesurée plusieurs fois et successivement pour un liquide d'essai et la correction de température est effectuée pour déterminer la modification temporelle de la grandeur à mesurer à une température prescrite comme mesure d'une cinétique de réaction.

12. Appareil d'analyse pour l'analyse de prélèvements de liquides corporels en ce qui concerne un composant qui y est contenu, lequel comprend:

une cuvette de mesure optique (6) destinée à recevoir un liquide d'essai, laquelle contient une aliquote du prélèvement et au moins un réactif, qui constitue une partie d'un système de réactifs spécifiques pour l'analyse du composant,
un dispositif de mesure de l'absorption (1), sélectif en longueur d'onde, pour déterminer l'absorption optique d'un liquide d'essai se trouvant dans la cuvette de mesure optique (6) à plusieurs longueurs d'onde différentes, qui comporte un émetteur (4) destiné à irradier un rayonnement électromagnétique dans le domaine du proche infrarouge dans la cuvette, un récepteur optique (11) pour la détection du rayonnement électromagnétique modifié par l'absorption optique en traversant la cuvette (6) et un dispositif de sélection de la longueur d'onde (10) pour sélectionner le rayonnement électromagnétique à des longueurs d'onde prédéfinies dans le domaine du proche infrarouge,
un dispositif de mesure de la température (3) ayant un capteur de température (15) qui est disposé ou peut être disposé dans la marche des rayons dans le dispositif de mesure de l'absorption de telle sorte que la température d'un milieu étalon contenu dans celui-ci est déterminable au cours d'une mesure de l'absorption sélective en longueur d'onde pour le milieu étalon, pour acquérir un enregistrement de données d'étalonnage de l'absorption optique du milieu étalon en fonction de la température , qui est mémorisé dans une unité mémoire, et
une unité d'ordinateur (2) pour le traitement des signaux du dispositif de mesure de l'absorption (1) et du dispositif de mesure de la température (3), qui contient des moyens de comparaison afin de déterminer la température d'un liquide d'essai dans la cuvette de mesure optique (6) à l'aide d'une comparaison de son absorption optique à plusieurs longueurs d'onde avec l'enregistrement de données d'étalonnage mémorisé dans l'unité mémoire.

12

Fig. 1

Fig. 2

Fig. 3

Fig. 4

Fig.5